# DEMANDE DE BREVET EUROPEEN

(11) **EP 0 709 146 A1**
(43) Date de publication de la demande: **01.05.1996**
(21) Numéro de dépôt: 94402433.0
(22) Date de dépôt: 27.10.1994
(51) Int. Cl.: B09B 3/00, B60S 5/00, F01M 11/04

(54) **Dispositif de vidange d'un réservoir de carburant d'un véhicule automobile**

(71) Demandeur: AUTOMOBILES PEUGEOT, F-75116 Paris (FR); AUTOMOBILES CITROEN, F-92200 Neuilly sur Seine (FR)
(72) Inventeur: Nieser, Stefan, D-66132 Saarbrücken (DE)
(74) Mandataire: Bouget, Lucien

(57) **Abrégé**

Le dispositif comporte un support (5), un dispositif de levage (7) porté par le support (5) comprenant un élément (8) monté mobile dans la direction verticale et un ensemble de perçage et de récupération de carburant (10) porté par l'élément mobile (8). L'ensemble (10) de perçage et de récupération de carburant comporte un vérin (9) ayant une tige (14) mobile dans la direction verticale, portant un poinçon de perçage (15), un récipient de récupération de carburant (11) dans lequel le poinçon (15) est monté coulissant dans la direction verticale et un conduit (12) de récupération de carburant en communication par l'une de ses extrémités, avec le volume intérieur du récipient de récupération (11).

## Description

La présente invention concerne un dispositif de vidange d'un réservoir de carburant d'un véhicule automobile.

Il peut être nécessaire de réaliser une vidange complète du réservoir d'un véhicule automobile, par exemple dans le cadre d'une opération et de recyclage des matériaux de véhicules hors d'usage.

Préalablement, aux opérations de recyclage et de récupération des matériaux proprement dites, il est nécessaire de réaliser la dépollution des épaves automobiles et en particulier, il est nécessaire d'assurer une vidange complète des réservoirs des véhicules hors d'usage pour des raisons de sécurité, afin d'éviter des explosions, des inflammations ou des dégagements de gaz toxiques.

Le démontage des réservoirs des épaves automobiles est une opération trop longue et trop coûteuse pour pouvoir être envisagée dans le cadre d'une opération industrielle de récupération des matériaux de véhicules automobiles.

Il est donc nécessaire de réaliser la vidange complète du réservoir, sans démontage préalable sur le véhicule qui repose sur le sol d'une zone de parcage ou d'un atelier, par l'intermédiaire de ses roues.

Les procédés et outils utilisés pour la vidange des réservoirs automobiles doivent être conçus de manière à pouvoir être utilisés aussi bien dans les unités industrielles de récupération de matériaux des véhicules hors d'usage que dans les ateliers de réparation de véhicules automobiles.

Ces outils doivent être conçus de manière que l'opération de vidange du réservoir soit effectuée rapidement, de manière la plus automatique possible et dans de très bonnes conditions de sécurité.

On ne connaissait pas jusqu'ici de dispositifs permettant d'assurer une vidange complète d'un réservoir de véhicule automobile et sans démontage du réservoir, de manière simple, rapide et sans danger pour le personnel chargé de cette opération.

Le but de l'invention est donc de proposer un dispositif de vidange d'un réservoir de carburant d'un véhicule automobile, qui permette d'effectuer une vidange complète de manière simple et rapide et avec des risques très réduits pour le personnel chargé des opérations de vidange.

Dans ce but, le dispositif de vidange suivant l'invention comporte :
- un support destiné à reposer sur le sol pour placer le dispositif en-dessous du véhicule automobile,
- un dispositif de levage porté par le support comprenant un élément monté mobile dans la direction verticale associé à un moyen moteur de déplacement, et
- un ensemble de perçage et de récupération de carburant porté par l'élément mobile du dispositif de levage et comprenant :
   - un vérin ayant une tige mobile dans la direction verticale portant un poinçon de perçage,
   - un récipient de récupération de carburant ouvert à l'une de ses extrémités présentant une surface d'appui sensiblement horizontale, dans lequel le poinçon est monté coulissant dans la direction verticale, et
   - un conduit de récupération de carburant en communication avec la partie inférieure du volume intérieur du récipient de récupération, à l'une de ses extrémités.

Afin de bien faire comprendre l'invention, on va maintenant décrire, à titre d'exemple non limitatif, en se référant aux figures jointes en annexe, un mode de réalisation d'un dispositif de vidange de réservoir de véhicule automobile, suivant l'invention.

Les figures 1 à 5 sont des vues schématiques en élévation d'un dispositif selon l'invention dans différentes positions fonctionnelles en-dessous d'un véhicule automobile, au cours d'une opération de vidange du réservoir du véhicule.

La figure 6 est une vue en coupe par un plan vertical du récipient de récupération de carburant du dispositif représenté sur les figures 1 à 5.

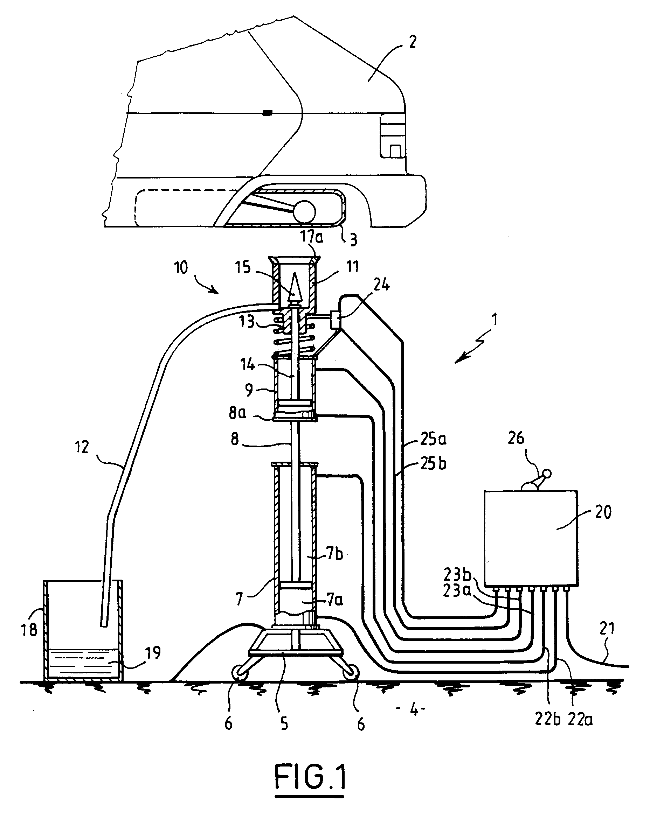

Sur les figures 1 à 5, on voit l'ensemble d'un dispositif de vidange suivant l'invention désigné de manière générale par le repère 1 disposé en-dessous d'un véhicule automobile hors d'usage 2, pour effectuer la vidange du réservoir de carburant 3 du véhicule préalablement à une opération de récupération des matériaux du véhicule.

Sur les figures 1 à 5, on a représenté la partie arrière du véhicule 2 comportant le réservoir 3 qui est accessible par le dessous du véhicule.

De manière à simplifier la représentation du dispositif de vidange 1 suivant l'invention, on a représenté ce dispositif en position de service en-dessous de la carrosserie du véhicule 2 qui est soulevée au-dessus du sol 4 par un dispositif de levage non représenté qui peut être constitué par un pont de levage. Pour simplifier la représentation, le véhicule automobile a également été représenté sans ses roues.

Cependant, il doit être compris que le dispositif 1 suivant l'invention pourrait être utilisé pour effectuer la vidange du réservoir d'un véhicule hors d'usage comportant ses roues et reposant sur le sol.

Le dispositif 1 selon l'invention comporte un support métallique 5 reposant sur le sol 4 par l'intermédiaire de roulettes 6 permettant de mettre en place le dispositif 1 dans une position voulue à l'aplomb du réservoir de carburant 3 du véhicule 2.

Sur le support 5 est fixé, dans une disposition verticale, le corps d'un vérin pneumatique 7 comportant une tige 8 mobile dans la direction verticale.

La tige 8 est solidaire à son extrémité supérieure d'un plateau 8a sur lequel est fixé un ensemble de perçage et de récupération de carburant 10 qui comporte un vérin 9 dont le corps est fixé dans une position verticale sur le plateau 8a, un récipient de récupération 11 et un conduit 12 d'écoulement de carburant fixé sur le récipient 11.

Le récipient 11 repose sur la partie d'extrémité supérieure du corps du vérin 9, par l'intermédiaire d'un ressort hélicoïdal 13 à l'intérieur duquel est engagée une partie d'extrémité inférieure du récipient 11 en saillie par rapport à un fond qui repose sur la spire supérieure du ressort 13.

Le vérin 9 comporte une tige 14 montée mobile dans la direction verticale à l'intérieur du corps de vérin fixé sur la platine 8a.

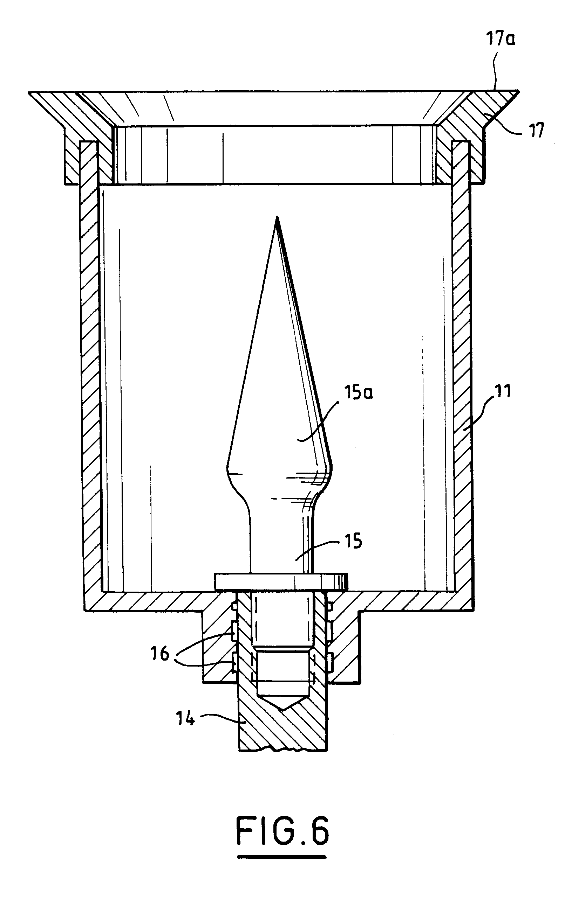

Comme il est visible sur la figure 6, la partie d'extrémité supérieure de la tige de vérin 14 comporte une ouverture taraudée dans laquelle est engagée et fixée par vissage, la tige d'assemblage filetée d'un poinçon 15 comportant une tête de perçage 15a présentant une pointe de forme sensiblement conique.

Le poinçon 15 est fixé à l'extrémité de la tige 14 du vérin 9, dans une disposition coaxiale par rapport à la tige.

La tige du vérin 14 est montée glissante à l'intérieur d'une ouverture cylindrique de direction verticale traversant le prolongement inférieur du fond du récipient 11, par l'intermédiaire de joints glissants 16 permettant d'assurer un passage étanche de la tige de vérin 14 à travers le fond du récipient 11.

Le récipient 11 de forme cylindrique est ouvert à son extrémité opposée à son fond et comporte fixé suivant son bord supérieur, une collerette d'appui 17 évasée vers le haut et présentant une surface d'appui plane sensiblement horizontale 17a.

Le conduit 12 de récupération de carburant est raccordé à un ajutage traversant la paroi du récipient 11 au voisinage de sa partie inférieure, de manière que le conduit 12 se trouve en communication avec la partie inférieure du volume intérieur du récipient 11.

La seconde extrémité du conduit 12 réalisé de préférence sous la forme d'un conduit souple transparent, par exemple en matière plastique, est engagée à l'intérieur d'une cuve 18 de recueil de carburant 19 reposant sur le sol 4.

Une armoire de commande 20 est reliée d'une part à un conduit souple 21 d'alimentation en air comprimé et d'autre part, aux vérins pneumatiques 7 et 9 dont l'armoire de commande 20 assure l'alimentation en air comprimé.

Les vérins pneumatiques 7 et 9 sont des vérins à double effet, comportant deux chambres qui sont reliées chacune à l'armoire de commande par une conduite souple d'alimentation en air comprimé

Les chambres 2a et 2b du vérin 7 sont reliées à l'armoire de commande 20 par les conduites 22a et 22b.

Les chambres 2a et 2b du vérin 9 sont reliées à l'armoire de commande 20 par les conduites souples 23a et 23b respectivement.

Le dispositif comporte de plus un capteur de pression 24 fixé sur le corps de vérin 9 qui est relié à l'armoire de commande 20 par l'intermédiaire de deux conduits souples 25a et 25b.

L'armoire de commande 20 comporte un ensemble de distributeurs pneumatiques qui permettent d'assurer de manière automatique, l'alimentation des chambres des vérins 7 et 9, dans un ordre déterminé, pour réaliser le déplacement des différents éléments mobiles du dispositif 1 au cours d'une opération de perçage d'un réservoir et de récupération du carburant du réservoir.

Une poignée de commande 26 qui peut être placée soit dans une position marche, soit dans une position arrêt, permet de faire démarrer l'opération de perçage et de récupération qui se déroule ensuite de manière totalement automatique et de commander le retrait du dispositif de perçage et de récupération à l'issue de la vidange d'un réservoir.

Pour réaliser une opération de perçage d'un réservoir et de récupération de carburant dans le réservoir, le dispositif 1 est placé à l'instant initial dans sa position fonctionnelle et représentée sur la figure 1.

Le support 5 du dispositif a été placé, grâce aux roulettes de déplacement 6, à l'aplomb du réservoir 3 du véhicule 2.

La cuve de récupération 18 est déposée sur le sol et l'extrémité du conduit de récupération 12 est introduit dans la cuve 18.

L'opérateur chargé de la récupération du carburant du réservoir de véhicule automobile, place la poignée de manoeuvre 26 de l'armoire de commande 20 dans la position marche, de manière à faire démarrer l'opération de perçage du réservoir 3 et de récupération du carburant 19.

L'ouverture programmée de distributeurs pneumatiques de l'armoire 20 permet d'assurer l'alimentation de la chambre inférieure 7a du vérin 7 par l'intermédiaire de la conduite 22a, de manière que la tige 8 du vérin 7 se déplace dans la direction verticale et vers le haut, et assure le déplacement de l'ensemble 10 de perçage et de récupération.

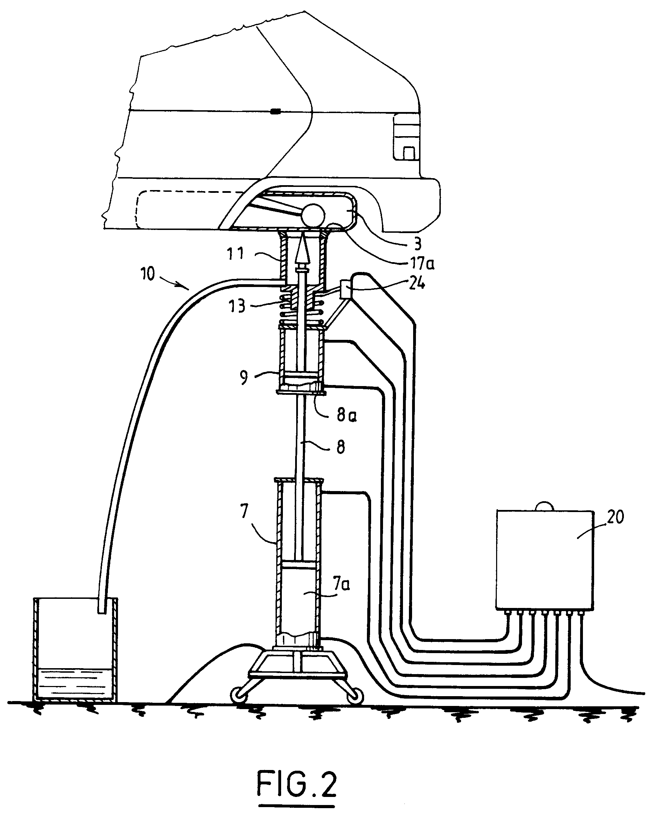

Après un certain déplacement vers le haut de l'ensemble 10, comme représenté sur la figure 2, la partie d'appui supérieure 17a du récipient de récupération 11 vient en appui sur la surface inférieure sensiblement horizontale du réservoir 3.

Le ressort hélicoïdal 13 intercalé entre le fond du récipient de récupération 11 et le corps du vérin 9 entraîné en déplacement vers le haut par la tige 8 du vérin 7 par l'intermédiaire de la platine 8a, se comprime dès que la surface d'appui 17a vient en contact avec le réservoir 3.

La pression d'alimentation du vérin 7 qui est mesurée par le capteur 24 augmente.

Le capteur 24 transmet un signal à l'armoire de commande 20 permettant d'arrêter l'alimentation de la chambre inférieure 7a du vérin 7 et de maintenir cette chambre sous pression, de sorte que la tige 8 du vérin 7 et l'ensemble 10 soient maintenus dans la position haute représentée sur la figure 2.

Un distributeur pneumatique commande alors l'alimentation de la chambre inférieure 9a du vérin 9 par l'intermédiaire de la conduite d'alimentation 23a.

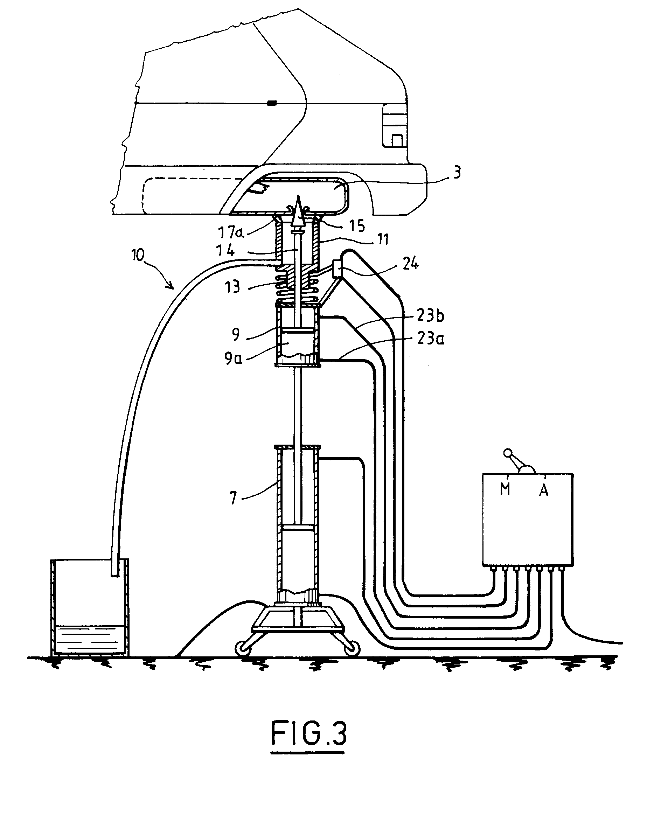

La tige 14 du vérin 9 portant à son extrémité, le poinçon 15 se déplace vers le haut, de manière que le poinçon 15 effectue le perçage de la paroi inférieure du réservoir 3, comme représenté sur la figure 3.

Le capteur 24 permet d'effectuer le contrôle de la pression de perçage et l'arrêt du poinçon après un déplacement vertical ayant assuré le perçage du réservoir.

Le récipient 11 est maintenu en appui par l'intermédiaire de sa surface supérieure plane horizontale 17a sur le fond du réservoir, par l'intermédiaire du ressort hélicoïdal 13 et du vérin 7 assurant le maintien de l'ensemble 10 en position haute.

A l'issue de l'opération de perçage, un distributeur pneumatique commande l'alimentation de la chambre 9b du vérin 9 par l'intermédiaire de la conduite 23b.

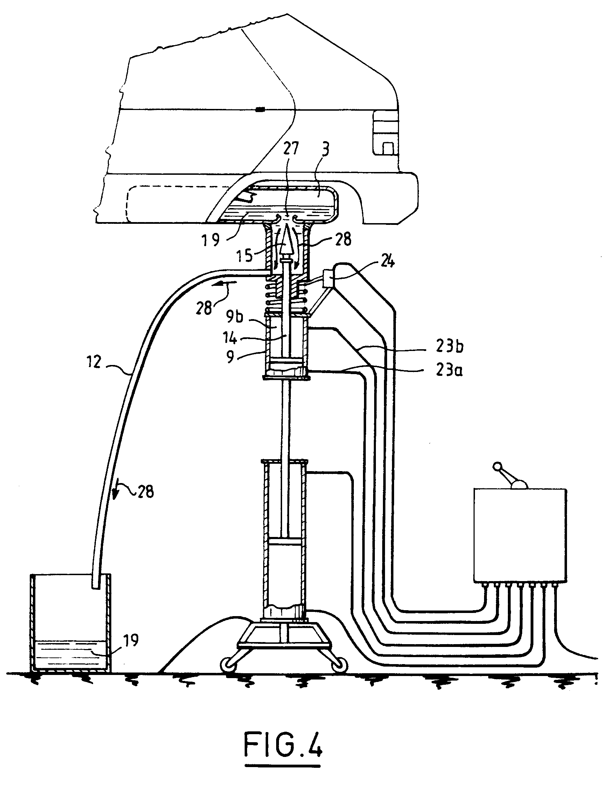

La tige 14 du vérin 9 se déplace vers le bas, de manière que le poinçon 15 revienne à l'intérieur du récipient de récupération 11 et dégage le perçage 27 de la paroi inférieure du réservoir 3, comme il est visible sur la figure 4.

Le carburant 19 contenu à l'intérieur du réservoir 3 s'écoule par le perçage 27 à l'intérieur du récipient de récupération 11 puis par l'intermédiaire du conduit de récupération 12, à l'intérieur de la cuve 18, comme représenté par les flèches 28 sur la figure 4.

Dans le cas où l'on utilise un tuyau de récupération 12 transparent, l'opérateur peut contrôler le déroulement de la vidange du réservoir de carburant 3.

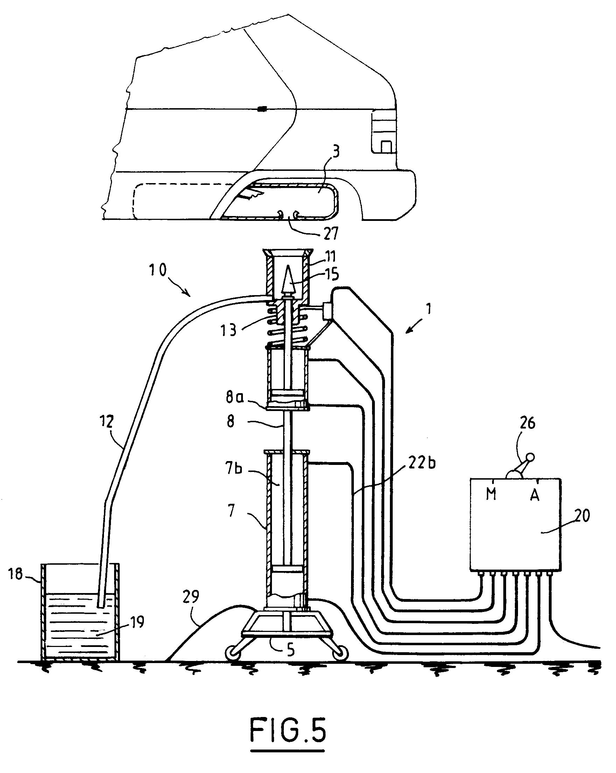

Lorsque la vidange est terminée, l'opérateur bascule la poignée de manoeuvre 26 de la position marche M vers la position arrêt A, comme il et visible sur la figure 5.

Un distributeur pneumatique commande l'alimentation de la chambre supérieure 7b du vérin 7 par l'intermédiaire du conduit d'alimentation d'air comprimé 22b.

L'ensemble de perçage et de récupération 10 solidaire de la tige 8 du vérin 7 se déplace vers le bas, de sorte que le récipient de récupération 11 reposant sur le ressort hélicoïdal 13 est déplacé vers le bas.

Lorsque l'ensemble 10 est revenu dans sa position basse représenté sur la figure 5, le cycle de fonctionnement du dispositif 1 s'interrompt. Le récipient 11 est alors dans une position entièrement dégagée par rapport à la partie inférieure du récipient 3 comportant le perçage 27 dont les bords sont constitués par les bords découpés de la tôle de fond du réservoir repliée vers le bas lors de l'extraction du poinçon 15 préalablement à l'écoulement du carburant.

Le dispositif 1 peut alors être transporté et placé sous un nouveau véhicule automobile pour assurer la vidange de ce nouveau véhicule.

Il est également possible de prévoir des moyens d'injection de gaz dans le récipient de récupération 11 ou au niveau du poinçon 15, lors du perçage, pour éviter tout risque d'inflammation du carburant pendant le perçage.

Afin d'éliminer les risques de formation d'étincelles entre le poinçon et la paroi du réservoir 3 pendant le perçage, le support métallique 5 du dispositif 1 est mis à la terre par l'intermédiaire d'un conducteur 29.

L'opération de perçage d'un réservoir et de récupération du carburant à l'intérieur de ce réservoir est donc réalisée d'une manière simple, rapide et en grande partie automatique, sans risque d'inflammation ou d'explosion.

L'invention ne se limite pas au mode de réalisation qui a été décrit.

C'est ainsi que les moyens de déplacement dans la direction verticale de l'ensemble de perçage et de récupération du poinçon peuvent être constitués par des moyens moteur différents de vérins pneumatiques. Toutefois, pour des raisons de sécurité, ces moyens ne doivent pas être électriques.

Le récipient de récupération peut présenter une forme différente de celle qui a été décrite et représentée et son montage sur l'ensemble de perçage et de récupération peut être réalisé différemment.

De préférence, on réalise un montage souple du récipient de récupération, ce montage souple pouvant être obtenu en utilisant un élément différent d'un ressort mécanique hélicoïdal.

Le dispositif suivant l'invention peut être utilisé aussi bien dans des unités industrielles de récupération de matériaux de véhicules automobiles que dans des ateliers de réparation de véhicules automobiles.

## Revendications

1. Dispositif de vidange d'un réservoir de carburant (3) de véhicule automobile (2), caractérisé par le fait qu'il comporte :
- un support (5) destiné à reposer sur le sol (4) pour placer le dispositif (1) en-dessous du véhicule automobile (2),
- un dispositif de levage (7) porté par le support (5) comprenant un élément (8) monté mobile dans la direction verticale, et
- un ensemble de perçage et de récupération de carburant (10) porté par l'élément mobile (8) du dispositif de levage (7) et comprenant :
- un vérin (9) ayant une tige (14) mobile dans la direction verticale et portant un poinçon de perçage (15),
- un récipient de récupération de carburant (11) ouvert à son extrémité supérieure constituant une surface d'appui (17a) sensiblement horizontale, dans lequel le poinçon (15) est monté coulissant dans la direction verticale, et
- un conduit de récupération de carburant (12) en communication avec la partie inférieure du volume intérieur du récipient de récupération (11), à l'une de ses extrémités.

2. Dispositif suivant la revendication 1, caractérisé par le fait que le dispositif de levage (7) est constitué par un vérin pneumatique dont le corps est fixé dans une position verticale sur le support (5), l'élément mobile du dispositif de levage (7) étant constitué par la tige (8) du vérin (7) disposée verticalement.

3. Dispositif suivant l'une quelconque des revendications 1 et 2, caractérisé par le fait que le vérin (9) de l'ensemble (10) de perçage et de récupération de carburant comporte un corps de vérin fixé à l'extrémité supérieure de l'élément mobile (8) du dispositif de levage (7).

4. Dispositif suivant la revendication 3, caractérisé par le fait que le récipient (11) repose sur la partie supérieure du corps du vérin (9) par l'intermédiaire d'un ressort hélicoïdal (13).

5. Dispositif suivant l'une quelconque des revendications 1 à 4, caractérisé par le fait que le poinçon de perçage (15) est fixé sur une partie d'extrémité supérieure de la tige (14) du vérin (9) de l'ensemble de perçage et de récupération (10), dans le prolongement axial de la tige (14).

6. Dispositif suivant la revendication 1, caractérisé par le fait que le dispositif de levage (7) est constitué par un premier vérin pneumatique à double effet et le vérin de l'ensemble (10) de perçage et de récupération de carburant par un second vérin pneumatique à double effet, le premier vérin pneumatique (7) et le second vérin pneumatique (9) étant alimentés en air comprimé par l'intermédiaire d'une armoire de commande (26) et de conduits d'alimentation en air comprimé (22a, 22b, 23a, 23b) reliés chacun à l'armoire de commande (20) à l'une de leurs extrémités et à une chambre du premier ou du second vérin pneumatique à leur autre extrémité.

7. Dispositif suivant la revendication 6, caractérisé par le fait que l'armoire de commande (20) comporte une poignée de commande (26) pour la mise en marche ou à l'arrêt du dispositif de vidange (1) et un ensemble de distributeurs pneumatiques pour la mise en fonctionnement séquentiel du premier vérin pneumatique à double effet (7) et du second vérin pneumatique à double effet (9), de manière à effectuer successivement la mise en appui du récipient de récupération (11) sur une paroi inférieure du réservoir (3) du véhicule automobile (2) et la mise en position de service du poinçon de perçage (15), l'actionnement du poinçon de perçage (15) pour réaliser le perçage de la paroi inférieure du réservoir (3), et le retrait du poinçon de perçage (27) de la paroi inférieure du réservoir (3) pour permettre la vidange de carburant (19) contenue dans le réservoir (3).

8. Dispositif suivant l'une quelconque des revendications 1 à 7, caractérisé par le fait qu'il comporte de plus une cuve (18) de récupération de carburant dans laquelle est introduite l'extrémité du conduit de récupération (12) opposée à l'extrémité de ce conduit (12) reliée au récipient de récupération (11).

9. Dispositif suivant l'une quelconque des revendications 1 à 8, caractérisé par le fait que le support (5) comporte des roulettes (6) assurant le déplacement du dispositif de vidange (1) sur le sol (4).

10. Dispositif suivant l'une quelconque des revendications 1 à 9, caractérisé par le fait que la tige (14) du vérin (9) de l'ensemble (10) de perçage et de récupération est montée glissante et étanche par l'intermédiaire de joints de glissement (16) dans une ouverture traversant un fond inférieur du récipient de récupération (11).
